# NEW EUROPEAN PATENT SPECIFICATION

(11) **EP 0 228 731 B2**
(45) Date of publication and mention of the opposition decision: **21.06.1995**
(45) Mention of the grant of the patent: 08.05.1991
(21) Application number: 86202150.8
(22) Date of filing: 03.12.1986
(51) Int. Cl.: F16C 19/00, G01N 29/00, B66C 23/84

(54) **Pivot ring**
Drehlager
Palier pivot

(30) Priority: 19.12.1985 NL 8503517
(43) Date of publication of application: 15.07.1987
(73) Proprietor: SKF Industrial Trading & Development Co, B.V., NL-3439 MT Nieuwegein (NL)
(72) Inventor: Bayer, Antonius Leonardus, Rumpt (NL); Hands, Godfrey, Vianen (NL); Bles, Bernhardus Arnoldus Lambertus, Worden (NL); Hovden, Dag Anders, Utrecht (NL)
(74) Representative: de Bruijn, Leendert C.

(56) References cited:
- EP-A- 0 076 384
- DE-A- 2 852 459
- DE-C- 2 947 937
- DE-U- 8 210 726
- GB-A- 1 572 107
- US-A- 4 092 053
- KONSTRUKTION, vol. 34, no. 4, 1982, page 132, Springer-Verlag, DE; L.A. ABDEL-LATIF: "Messung des Betriebszustands von Wälzlagern mit Hilfe optischer Glasfasern"
- Johannes Wozniak; "Lastverteilung in Wälzdrehverbindungen; ein Beitrag zur theoretischen und experimentellen Bestimmung von Wälzkörper-Kraft-vektoren", Ruhr-Universität Bochum, Institut für Konstruktionstechnik, Schriftenreihe Heft 81.1, Lehrstuhl für Maschinenelemente und Fördertechnik; pages 30, 31 to 35, 39, 59 to 65 and 131; Figures 2, 3, 14 to 16 28, 31, 33 and 35
- Database "DOMA" extract number M81084742370

## Description

The invention relates to a pivot ring comprising an inner annular member arranged within an outer annular member, said outer annular member being provided on an inner surface and said inner annular member on an outer surface with at least one race, such that each race on said outer annular member faces a race on said inner annular member, gaps being defined between said facing races and said gaps accommodating (a) circulating serie(s) of rolling elements, whereby, in at least one of the annular members, at least one hole is provided containing sensing means.

Pivot rings are generally known and serve for the rotatable mounting of comparatively heavy pieces of equipment. In particular, pivot rings are used in cranes for mounting the boom assembly to rotate about a vertical axis relative to a substructure, the pivot ring being required to assume great forces and moments of force in alternating directions. Because the perfect condition of such a pivot ring is of vital importance, and the pivot ring specifically is heavily loaded in operation, there are regulations under which the pivot ring must be frequently inspected for the timely discovery of material defects, especially crack formation in the ring.

In the European patent application 0 076 384 such a pivot assembly is disclosed according to which the support means, such as bolts or studs are loaded hydraulically in order to facilitate the separation of the bearing or pivot assembly from its mounting structure. Heretofore, it is thus necessary for the purpose of inspection or the like to dismantle the entire hoist arrangement for proper inspection of the annular members of the pivot ring, and afterwards to reassamble the equipment. It will be obvious that this dismantling is a time-consuming operation during which, moreover, the hoist system is out of service. Furthermore, it has been found that the result of such an inspection would often be that the pivot ring is still in perfect condition, so that the inspection was in a sense unnecessary, whereas on the other hand the inspection may have come too late, in showing that a crack has already begun to form.

From Johannes Wozniak "Lastverteilung in Wälzdrehverbindungen; ein Beitrag zur theoretischen und experimentellen Bestimmung von Wälzkörpern-Kraftvektoren", Ruhr-Universität Bochum, Institut für Konstruktionstechnik, Schriftenreihe Heft 81.1, Lehrstuhl für Maschinenelementen und Fördertechnik, a pivot ring is known comprising sensing means for measuring internal stresses in the outer and inner rings.

The object of the invention is to provide a pivot ring of the type described that can be inspected without need to dismantle the entire arrangement in which the pivot ring is installed.

This object is accomplished in that, according to the invention, the sensing means is an ultrasonic probe, and that each hole opens out outside the race or the annular member in such a way that the ultrasonic probe is situated directly opposite the other annular member for scanning critical areas in said opposite annular member for detection of material defects therein, upon rotation of one of the annular members.

The opening to accommodate an ultrasonic probe preferably comprises a hole drilled in one of the annular members of the pivot ring, the centerline of the said hole being directed at the innermost edge of a race of the other annular member.

In a pivot ring where the races of the annular members lie in planes perpendicular to the centerline of the pivot ring, preferably the said hole is arranged in the inner annular member, and the centerline of the hole is directed perpendicular to a bevel on the inner edge of the race of the outer annular member and displaced a slight distance outward from the centre of the said bevel.

It is noted that it is known per se, for example from U.S. Patent 3.969.926, that an ultrasonic probe may be used to detect material defects.

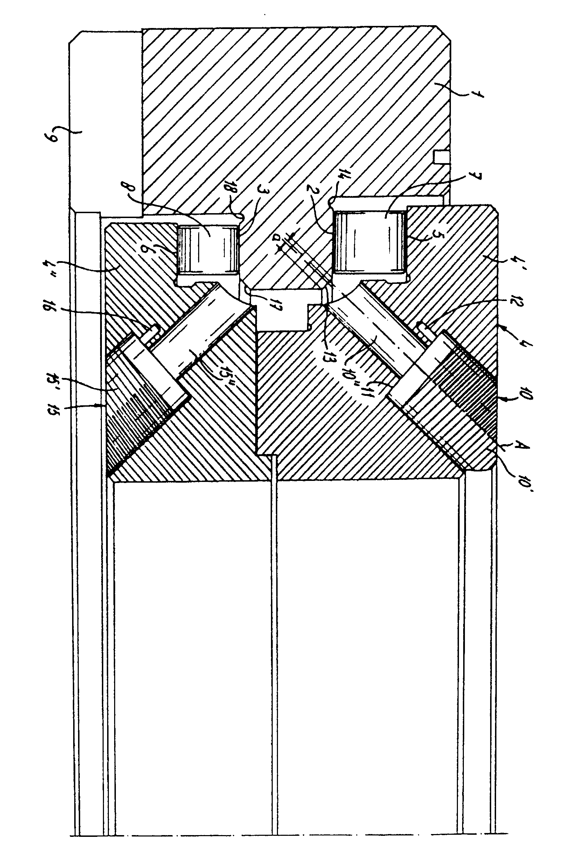

The invention will be further explained with reference to the drawing, in which a pivot ring according to the invention is shown in radial section by way of example.

As shown in the drawing, the pivot ring comprises an outer annular member 1 having two races 2 and 3 on the inside of said member, and an outer annular member 4 consisting of two parts 4' and 4'', provided with two races 5 and 6 facing the race 2 and 3 respectively of the outer member 1. Between races 2 and 5 a series of rolling elements 7 are located, and between races 3 and 6 a series of rolling elements 8.

In the lower face of the outer annular member 1, a groove 9 extending radially is formed, which serves to mount the member 1 on the substructure of a crane for example.

In part 4' of the inner annular member 4, a hole 10 is arranged, consisting of an internally threaded outer portion 10' and an inner portion 10'' of smaller diameter. In the shoulder 11 formed at the transition from the portion 10' of larger diameter to the portion 10'' of smaller diameter, a plurality of blind holes 12 are provided. The centerline A of the hole 10 is perpendicular to a bevel 13 on the inner edge of the race 2, this centerline A being displaced outward by a distance a from the centre of the bevel 13.

In the hole 10 an ultrasonic probe, not shown, of otherwise known type, can be fixed and means of directing the probe may be set in the blind holes 12, by means of which probe material defects in the critical areas comprising among others the race-way and fillet 18 at the inner edge of the race 3 can be scanned and inspected.

In the same manner as the hole 10, a hole 15 is arranged in part 4'' comprising an internally threaded portion 15' and a portion 15'' of smaller diameter, a set of blind holes 16 being provided as before. In the hole 15 another ultrasonic probe, not shown, can be fixed directed at the bevel 17 on the extreme edge of the race-way by means of which material defects can be detected respectively of race 2 and fillet 14.

## Claims

1. A pivot ring comprising an inner annular member (4) arranged within an outer annular member (1), said outer annular member (1) being provided on an inner surface and said inner annular member (4) on an outer surface with at least one race (2, 3, 5, 6), such that each race (2, 3) on said outer annular member (1) faces a race (5, 6) on said inner annular member (4), gaps being defined between said facing races (2,5; 3, 6) and said gaps accommodating (a) circulating serie(s) of rolling elements (7, 8), whereby, in at least one of the annular members, at least one hole (10, 15) is provided containing sensing means characterized in that the sensing means is an ultrasonic probe and that each hole (10, 15) opens out outside the race (2, 3, 5, 6) of the annular member (1, 4) in such a way that the ultrasonic probe is situated directly opposite the other annular member (1, 4) for scanning critical areas in said opposite annular member (1, 4) for detection of material defects therein, upon rotation of one of the annular members (1, 4).

2. Pivot ring according to claim 1, characterized in that the hole (10, 15) is drilled in one of the annular members (4), the centerline (A) of the hole being directed at the inner edge of a race (2, 3) of the other annular member (1).

3. Pivot ring according to claim 2 wherein the races of the annular members lie in planes perpendicular to the centerline of the pivot-ring, characterized in that the said hole (10, 15) is arranged in the inner annular member (4) and the centerline (A) of said hole is perpendicular to a bevel (13, 17) on the inner edge of a race (2, 3) of the outer annular member (1), and is displaced a slight distance (a) outward from the center of the bevel (13, 17).

## Patentansprüche

1. Drehlager mit einem inneren Ringelement (4), das in einem äußeren Ringelement (1) angeordnet ist, wobei das äußere Ringelement (1) auf einer inneren Fläche und das innere Ringelement (4) auf einer äußeren Fläche mit mindestens einer Laufbahn (2, 3, 5, 6) derart versehen ist, daß jede Laufbahn (2, 3) auf dem äußeren Ringelement (1) einer Laufbahn (5, 6) auf dem inneren Ringelement (4) gegenüberliegt und zwischen den sich gegenüberliegenden Laufbahnen (2,5; 3,6) Leerräume begrenzt sind, welche (eine) Reihe(n) von umlaufenden Wälzkörpern (7,8) aufnehmen, wobei in wenigstens einem der Ringelemente (1, 4) wenigstens ein Fühlmittel enthaltendes Loch (10, 15) vorgesehen ist, **dadurch gekennzeichnet**, daß das Fühlmittel eine Ultraschallsonde ist und jedes Loch (10, 15) abseits der Laufbahn (2, 3, 5, 6) des Ringelements (1, 4) derart mündet, daß sich die Ultraschallsonde direkt gegenüber dem anderen Ringelement (1, 4) befindet, um bei Drehung eines der Ringelemente (1, 4) kritische Bereiche in diesem anderen Ringelement (1, 4) zur Feststellung von darin befindlichen Materialfehlern abzutasten.

2. Drehlager nach Anspruch 1, dadurch gekennzeichnet, dass das Loch (10, 15) in eines der ringförmigen Elemente (4) gebohrt ist, wobei die Mittellinie (A) dieses Loches auf die innere Kante einer Laufbahn (2, 3) des anderen ringförmigen Elements (1) gerichtet ist.

3. Drehlager nach Anspruch 2, bei welchem die Laufbahnen der ringförmigen Elemente in Ebenen rechtwinklig zur Mittellinie des Drehlagers liegen, **dadurch gekennzeichnet,** daß das Loch (10, 15) in dem inneren ringförmigen Element (4) angebracht ist und die Mittellinie (A) des Lochs rechtwinklig zu einer Schrägfläche (13, 17) auf der inneren Kante einer Laufbahn (2, 3) des äußeren ringförmigen Elements (1) verläuft und um einen geringen Abstand (a) von der Mittellinie der Schrägfläche (13, 17) nach außen verschoben ist.

## Revendications

1. Couronne d'orientation comprenant un élément annulaire intérieur (4) disposé à l'intérieur d'un élément annulaire extérieur (1), ledit élément annulaire extérieur (1) étant pourvu, sur sa surface intérieure, et ledit élément annulaire intérieur (4), sur sa surface extérieure, d'au moins un chemin de roulement (2, 3, 5, 6), de telle sorte que chaque chemin de roulement (2, 3) présent sur ledit élément annulaire extérieur (1) se trouve en face d'un chemin de roulement (5, 6) présent sur ledit élément annulaire intérieur (4), des intervalles étant définis entre lesdits chemins de roulement (2, 5 ; 3,6) et lesdits intervalles logeant une série(s) circulantes d'éléments roulants (7, 8) et, dans au moins un des éléments annulaires (1, 4) au moins un trou (10, 15) etant formé contenant un moyen de détection, caractérisé en ce que le moyen de détection est une sonde à ultrasons et en ce que chaque trou (10, 15) débouche à l'extérieur du chemin de roulement (2, 3, 5, 6) de l'élément annulaire (1, 4) de manière telle que la sonde à ultrasons se trouve directement en face de l'autre élément annulaire (1, 4) pour explorer des zones critiques de cet autre élément annulaire (1, 4) afin d'y détecter, lorsque l'on fait tourner un des éléments (1, 4), les défauts du matériau.

2. Couronne d'orientation selon la revendication 1, caractérisée en ce que le trou (10, 15) est percé dans un des éléments annulaires (4) et dont l'axe (A) est dirigé vers le bord intérieur d'un chemin de roulement (2, 3) de l'autre élément annulaire (1).

3. Couronne d'orientation selon la revendication 2, dans laquelle les chemins de roulement des éléments annulaires se trouvent dans des plans perpendiculaires à l'axe de la couronne d'orientation, **caractérisée** en ce que ledit trou (10, 15) est formé dans l'élément annulaire intérieur (4) et l'axe (A) de ce trou est perpendiculaire à un chanfrein (13, 17) présent sur le bord intérieur d'un chemin de roulement (2, 3) de l'élément annulaire extérieur (1), et est décalé d'une légère distance (a) vers l'extérieur par rapport au centre du chanfrein (13, 17).
